# EUROPEAN PATENT APPLICATION

(11) **EP 4 733 053 A1**
(43) Date of publication of application: **29.04.2026**
(21) Application number: 24851509.0
(22) Date of filing: 10.07.2024
(51) Int. Cl.: B29D 30/30, B29D 30/60

(54) **TIRE MATERIAL SUPPLY SYSTEM AND CYLINDRICAL TIRE MEMBER MANUFACTURING METHOD**

(30) Priority: 08.08.2023 JP 2023129634
(71) Applicant: The Yokohama Rubber Co., Ltd., Hiratsuka-shi, Kanagawa 254-8601 (JP)
(72) Inventor: KONDO, Masatomo, Hiratsuka-shi, Kanagawa 254-8601 (JP); MATSUMURA, Kensuke, Hiratsuka-shi, Kanagawa 254-8601 (JP); NUMAZAKI, Yasushi, Hiratsuka-shi, Kanagawa 254-8601 (JP); KAWAI, Masahiro, Hiratsuka-shi, Kanagawa 254-8601 (JP); OISHI, Junpei, Hiratsuka-shi, Kanagawa 254-8601 (JP); ZENYOJI, Chihiro, Hiratsuka-shi, Kanagawa 254-8601 (JP); WATANABE, Takehiro, Hiratsuka-shi, Kanagawa 254-8601 (JP); SAITO, Dai, Hiratsuka-shi, Kanagawa 254-8601 (JP); MATSUMARU, Teruaki, Hiratsuka-shi, Kanagawa 254-8601 (JP); ONISHI, Kohei, Hiratsuka-shi, Kanagawa 254-8601 (JP); WATANABE, Masayuki, Hiratsuka-shi, Kanagawa 254-8601 (JP)
(74) Representative: Dilg, Haeusler, Schindelmann Patentanwaltsgesellschaft mbH
(86) International application number: PCT/JP2024/024881
(87) International publication number: WO 2025/033080

(57) **Abstract**

Provided are a supply system for rapidly switching between different types of tire material and supplying one type of tire material to a forming drum body without complicated operation and for supplying a desired type of tire material within a desired range of the forming drum body in a width direction and a method of manufacturing a cylindrical tire member. In independent supply paths from supply units (1A and 1B) to heads (3A and 3B) corresponding to respective types of tire materials (M1 and M2) having a strip shape, predetermined amounts of tire materials (M1 and M2) are respectively stored in festoon portions (2a and 2b) between the supply units (1A and 1B) and the heads (3A and 3B), the heads (3A and 3B) are arranged displaced in a drum front-rear direction with respect to a forming drum body (7), the heads (3A and 3B) are integrally slid in a width direction of the forming drum body (7), the tire materials (M1 and M2) are helically wound around the forming drum body (7), and a cylindrical tire member (M) is manufactured.

## Description

### Technical Field

The present invention relates to a system for supplying a tire material and a method of manufacturing a cylindrical tire member and particularly relates to a system for supplying a tire material that can rapidly switch, in a process of manufacturing a cylindrical tire member by supplying a strip-shaped tire material to a forming drum body and helically winding the tire material, between different types of tire material to supply one type of tire material to the forming drum body without complicated operation and can supply a desired type of tire material within a desired range of the forming drum body in a width direction and a method of manufacturing a cylindrical tire member.

### Background Art

Green tires are manufactured by vulcanization. The green tires are formed with many types of tire members layered. For example, a belt reinforcing layer is manufactured by a strip material being helically wound around an outer circumferential surface of a belt layer formed cylindrically on a forming drum. Various apparatuses for winding such a strip material have been proposed (see, for example, Patent Document 1).

The apparatus proposed in Patent Document 1 includes a pair of left and right winding units in order to easily switch between multiple types of strip materials and supplying one of the strip materials to the forming drum. The pair of left and right winding units are arranged symmetrically with respect to a center in a width direction of the forming drum, and a plurality of winding heads are arranged in parallel in each winding unit. Each of the winding heads arranged in parallel receives a different type of strip material. The left winding unit moves in a drum width direction (left-right direction) in a range on a left side from the center in the drum width direction, supplies the strip material to the forming drum, and forms a helical layer. The right winding unit moves in the drum width direction (left-right direction) in a range on a right side from the center in the drum width direction, supplies the strip material to the forming drum, and forms a helical layer.

This apparatus has a winding range of each of the left and right winding units divided along the center in the drum width direction as a boundary. To wind the strip material in a range on both sides in the drum width direction, both left and right winding heads need to be moved in the drum width direction. Furthermore, to wind a desired type of strip material within a desired range of the forming drum in the width direction, the respective winding units and winding heads need to be controlled appropriately, causing complicated operation. This has room for improvement in rapidly switching between different types of tire material to supply one type of tire material to the forming drum body without complicated operation and supplying a desired type of tire material within a desired range of the forming drum in the width direction.

### Citation List

### Patent Literature

Patent Document 1: JP 2015-9548 A

### Summary of Invention

### Technical Problem

An object of the present invention is to provide a system for supplying a tire material to a forming drum body that can rapidly switch between different types of tire material to supply one type of tire material to the forming drum body without complicated operation and can supply a desired type of tire material within a desired range of the forming drum body in the width direction and a method of manufacturing a cylindrical tire member.

### Solution to Problem

To achieve the object described above, a system for supplying a tire material according to an embodiment of the present invention is a system for supplying a tire material to a forming drum body. The system includes: supply units disposed at a stock position and each including a type of tire material having a strip shape wound and stocked; a forming drum body around which each tire material is helically wound; and a head for each type of tire material configured to helically wind the tire material unreeled from each of the supply units around the forming drum body. A supply path from each of the supply units to the head is independent for each type of tire material. In each supply path, a festoon portion configured to store a predetermined amount of the tire material supplied through the supply path between the supply unit and the head is placed. Each head is disposed displaced in a drum front-rear direction with respect to the forming drum body, Each head is configured to integrally slide in a width direction of the forming drum body.

A method of manufacturing a cylindrical tire member according to an embodiment of the present invention includes using the system for supplying a tire material to a forming drum body, supplying the tire material to the forming drum body, helically winding the tire material, and manufacturing a cylindrical tire member.

### Advantageous Effects of Invention

In the system for supplying a tire material of an embodiment of the present invention, the supply path from each of the supply units to the head is independent for each type of tire material, allowing a desired type of the tire material to be wound around the forming drum body by simply switching between each head to be used. This can rapidly switching between different types of tire material to supply one type of tire material to the forming drum body without complicated operation.

Each head is disposed displaced in the drum front-rear direction with respect to the forming drum body, and each head slides integrally in the width direction of the forming drum body. This allows the one head to slide without being regulated by the other head. This is advantageous in supplying a desired type of the tire material to a desired range of the forming drum body in the width direction without complicated operation.

The festoon portion is disposed in each supply path, each tire material can be stably replenished without interrupting the supply of the tire material. Accordingly, this is increasingly advantageous in avoiding complication of the operation when continuously supplying each tire material to the forming drum body.

In a method of manufacturing a cylindrical tire member of the embodiment of the present invention, using the system for supplying a tire material to a forming drum body as described above allows the tire member to be manufactured without complicated operation and with high productivity.

### Brief Description of Drawings

FIG. 1 is an explanatory plan view illustrating an example of a system for supplying a tire material according to an embodiment.
FIG. 2 is an explanatory side view illustrating a forming drum body and respective heads of FIG. 1.
FIG. 3 is an explanatory plan view illustrating respective heads of FIG. 1.
FIG. 4 is an explanatory view illustrating a state in which one tire material is supplied to the forming drum body by one head of FIG. 2.
FIG. 5 is an explanatory view illustrating a state in which the other tire material is supplied to the forming drum body by the other head of FIG. 2.

### Description of Embodiments

A system for supplying a tire material to a forming drum body and a method of manufacturing a cylindrical tire member of an embodiment of the present invention will be described with reference to an embodiment illustrated in the drawings.

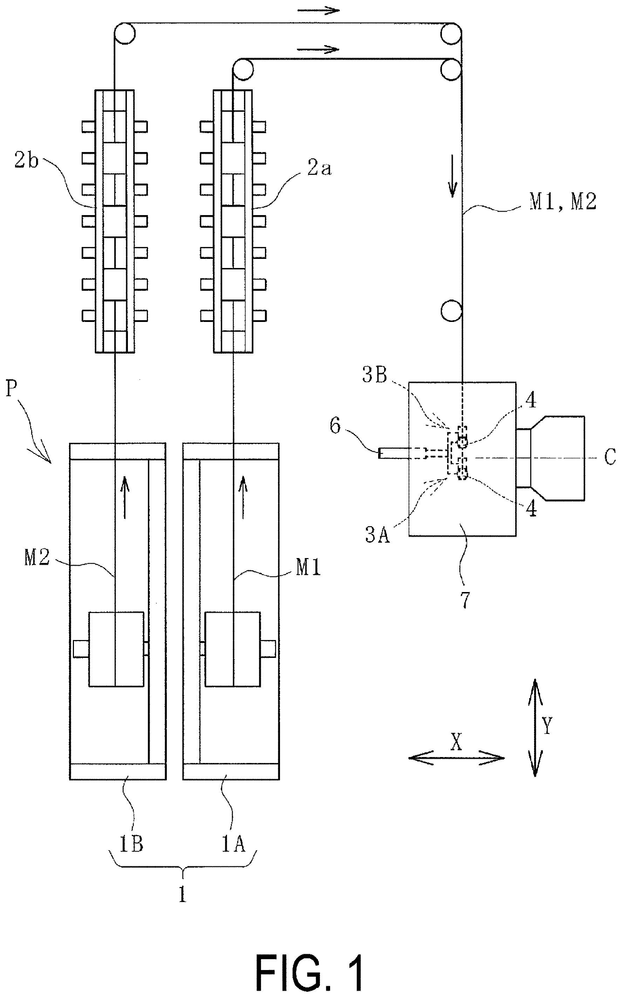

By using the system for supplying a tire material to a forming drum body (hereinafter referred to as a supply system) illustrated in FIGS. 1 to 3, strip-shaped tire materials M1 and M2 are helically wound around a forming drum body 7, and a cylindrical tire member M is manufactured. The tire materials M1 and M2 are made of, for example, unvulcanized rubber or a reinforcing cord. As the tire materials M1 and M2, a belt reinforcing member is helically wound around the forming drum body 7 on which the cylindrical belt layer is formed and formed into a cylindrical shape, whereby the cylindrical belt reinforcing layer is manufactured. The belt reinforcing layer is used as a constituent member of a green tire G, and the green tire G is vulcanized to manufacture a tire T.

As illustrated in FIGS. 1 to 3, the supply system includes supply units 1 (1A and 1B) disposed at a stock position P1, the forming drum body 7, heads 3A and 3B, festoon portions 2a and 2b, proximity movement units 5 and 5 that cause the heads 3A and 3B to approach the forming drum body 7, and a sliding unit 6 that slides the heads 3A and 3B in the width direction (X direction) of the forming drum body 7. In the drawings, X, Y, and Z arrows respectively indicate a width direction, a front-rear direction, and a height direction of the supply system, and these directions are orthogonal to each other. In the drawings, a forward direction is the direction from a conveyor toward the forming drum body 7 in the front-to-back direction (Y-direction).

A plurality of supply units 1A and 1B are arranged in parallel at the stock position P1. The tire material M1 is wound around one supply unit 1A and stocked. The tire material M2 is wound around the supply unit 1B and stocked. The supply units 1A and 1B each have a winding core, and the tire materials M1 and M2 are wound around each winding core and stocked. In this manner, the tire materials M1 and M2 are wound by type and stocked.

The forming drum body 7 rotates about a drum axial center C. The drum axial center C extends in the X direction (parallel to the X direction). The tire materials M1 and M2 unreeled and supplied from the respective supply units 1A and 1B are helically wound around the forming drum body 7 by respective heads 3A and 3B.

For each type of tire material M1 or M2, the supply paths from the supply units 1A and 1B to the respective heads 3A and 3B are independent. That is, one type of tire material M1 is supplied to the forming drum body 7 through the supply path from one supply unit 1A to one head 3A. The other tire material M2 is supplied to the forming drum body 7 through a supply path from the other supply unit 1B to the other head 3B. Accordingly, the supply units 1A and 1B and the respective heads 3A and 3B are provided for each type of tire material M1 or M2.

The festoon portions 2a and 2b are respectively placed between the supply units 1A and 1B and the heads 3A and 3B in the supply paths for the tire materials M1 and M2. The festoon portions 2a and 2b each store a predetermined amount of the tire materials M1 and M2 supplied through the respective supply paths. Thus, the tire materials M1 and M2 unreeled from the respective supply units 1A and 1B pass through the respective festoon portions 2a and 2b and are supplied to the respective heads 3A and 3B. Various known types can be used for the festoon portions 2a and 2b.

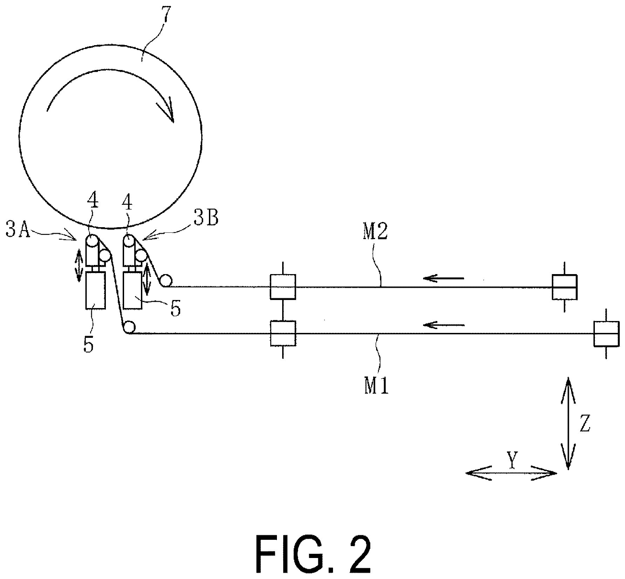

In the present embodiment, a plurality of support rollers are disposed in the supply paths for the respective tire materials M1 and M2, and the tire materials M1 and M2 are stretched over the respective support rollers to change the conveying directions thereof and supplied to the forming drum body 7 from the respective supply units 1A and 1B. In the present embodiment, as illustrated in FIG. 1, the tire materials M1 and M2 unreeled from the respective supply units 1A and 1B advance along the Y direction by passing through the respective festoon portions 2a and 2b, change their directions by 90 degrees and advance along the X direction (lateral movement section), and then change their directions by 90 degrees and advance along the Y direction (a drum supplying section) to be supplied to the forming drum body 7. In this drum supplying section, the tire materials M1 and M2 extend overlapping each other in a plan view and, in a side view as illustrated in FIG. 2, one tire material M1 and the other tire material M2 are vertically spaced apart from each other, with the other tire material M2 located above the one tire material M1.

Each head 3A or 3B includes a compression bonding portion 4. The compression bonding portion 4 guides and presses the supplied tire material M1 and M2 toward the outer circumferential surface of the forming drum body 7. A rotary roller body or the like is used as the compression bonding portion 4. Each head 3A or 3B also includes a cutter for cutting the tire materials M1 and M2.

An proximity movement unit 5 causes the head 3A to approach (move toward and away from) the forming drum body 7. As the proximity movement unit 5, a fluid cylinder such as a hydraulic cylinder, a rod that advances and withdraws by a servo motor, or the like can be used.

The sliding unit 6 slides the respective heads 3A and 3B integrally in the width direction with respect to the forming drum body 7. As the sliding unit 6, a fluid cylinder such as a hydraulic cylinder, a rod that advances and withdraws by a servo motor, or the like can be used.

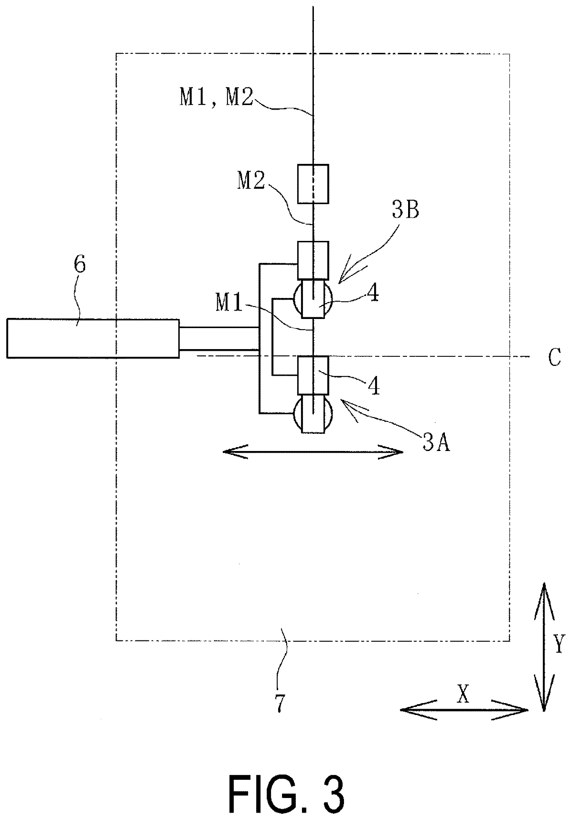

As illustrated in FIG. 3, the heads 3A and 3B are arranged in series displaced in the drum front-rear direction (Y direction) with respect to the forming drum body 7. The respective heads 3A and 3B move independently toward and away from the forming drum body 7 by the respective proximity movement units 5 and 5. The compression bonding portion 4 moves to a standby position away from the outer circumferential surface of the forming drum body 7 and a winding position close thereto, and the compression bonding portion 4 moved to the winding position presses the respective tire materials M1 and M2 toward the outer circumferential surface of the forming drum body 7.

In the present embodiment, the respective heads 3A and 3B are connected by a connecting body, and the tip of a rod of a single sliding unit 6 is connected to the connecting body. Sliding the two heads 3A and 3B integrally in the width direction using the single sliding unit 6 is advantageous for simplifying the configuration of the apparatus and the operation thereof. The range within which the respective heads 3A and 3B slide is set to cover all the range in the width direction where the tire materials M1 and M2 are wound.

Therefore, each head 3A or 3B is slidable in the width direction without being restricted by each other. That is, the compression bonding portion 4 of one head 3A or 3B is slidable in the width direction in a range from one end portion to the other end portion of the forming drum body 7 in the width direction without being restricted by the presence of the other head 3B or 3A.

Next, an example of a procedure of manufacturing the cylindrical tire member M using this supply system will be described.

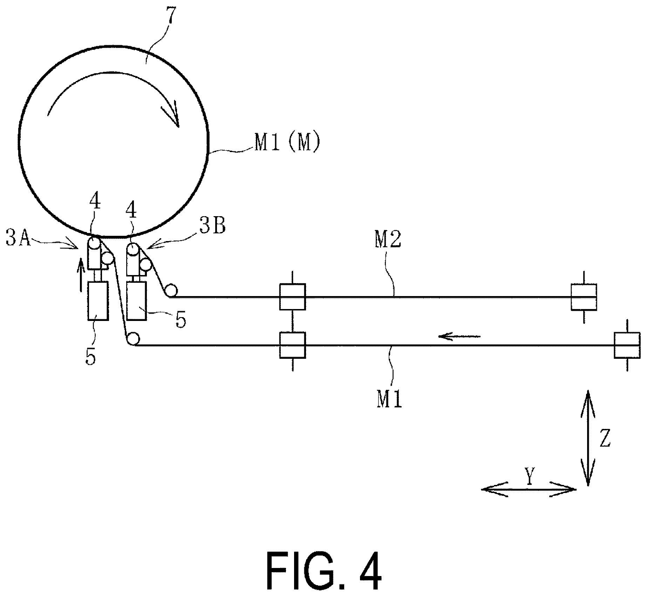

This supply system continuously manufactures the cylindrical tire member M. When manufacturing the tire member M using one tire material M1, as illustrated in FIG. 4, the forming drum body 7 is rotated about the drum axial center C, and the compression bonding portion 4 of one head 3A is moved within a desired range in the width direction at a position close to the outer circumferential surface of the forming drum body 7. Accordingly, the tire material M1 supplied to the head 3A is helically wound around the forming drum body 7 by the compression bonding portion 4. Using the single sliding unit 6, the respective heads 3A and 3B are slid integrally in the width direction to wind the tire material M1 within the desired range of the forming drum body 7 in the width direction and cut the tire material M1, whereby the tire member M with the cylindrical-shaped tire member M is manufactured.

For example, the tire material M1 as the belt reinforcing member is helically wound around the outer circumferential surface of the belt layer on the forming drum body 7 to manufacture the belt reinforcing layer as the tire member M and laminate it on the belt layer. The manufactured tire member M is removed from the forming drum body 7, and then the same procedure is carried out to continuously manufacture a new tire member M on the forming drum body 7.

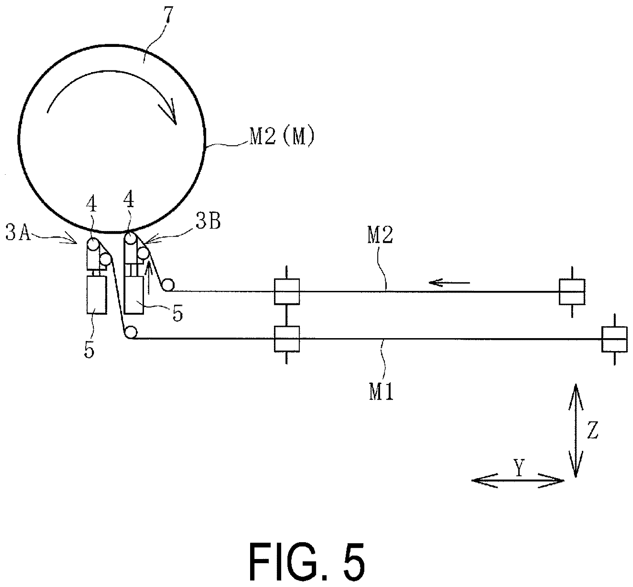

When manufacturing the tire member M using the forming drum body 7 by switching the tire material from the tire material M1 to a different type of tire material M2, as illustrated in FIG. 5, the forming drum body 7 is rotated about the drum axial center C, and the respective heads 3A and 3B are integrally moved within a desired range in the width direction using the single sliding unit 6 at a position where the compression bonding portion 4 of the other head 3B is moved close to the outer circumferential surface of the forming drum body 7. Accordingly, the tire material M2 supplied to the head 3B is helically wound around the forming drum body 7 by the compression bonding portion 4. When the tire material M2 is wound within the desired range of the forming drum body 7 in the width direction, the tire material M2 is cut, and the tire member M in which the tire material M2 is formed into a cylindrical shape is manufactured. The manufactured tire member M is removed from the forming drum body 7, and then the same procedure is carried out to continuously manufacture a new tire member M on the forming drum body 7.

In this supply system, the desired type of tire materials M1 and M2 can be wound around the forming drum body 7 by simply switching between the heads 3A and 3B to be used. This can rapidly switched between the different types of tire materials M1 and M2 to supply one type of tire material to the forming drum body 7.

The tire member M may also be manufactured by, after the tire member M is manufactured by helically winding one tire material M1 around the forming drum body 7, helically winding the other tire material M2 adjacent to or spaced apart from the tire member M in the width direction or laminated on the tire member M. Also in this case, supplying the tire material to the forming drum body 7 by switching the tire material from the tire material M1 to the tire material M2 only needs switching between the heads 3A and 3B, eliminating complicated operation.

As described above, the respective heads 3A and 3B can slide in the width direction without being regulated by the opposing heads 3B and 3A. The presence of the other head 3B or 3A for sliding the one head 3A or 3B in the width direction does not need to be considered, eliminating complicated operation. This is advantageous in supplying and winding the desired types of tire materials M1 and M2 within the desired range of the forming drum body 7 in the width direction. That is, by using one head of the respective heads 3A and 3B to move each tire material M1 and M2 within the desired range of the forming drum body 7 in the width direction and helically winding the tire material, the cylindrical tire member M can be easily manufactured within the desired range in the width direction.

The festoon portions 2a and 2b are placed in the supply paths of the respective tire materials M1 and M2. When the stocks of the tire materials M1 and M2 in the respective supply units 1A and 1B run out (become less), the tire materials M1 and M2 needs to be replenished before the storage amount in the festoon portions 2a and 2b become equal to or less than the reference amount. Thus, the tire materials M1 and M2 can be replenished stably without interrupting the supply of the tire materials M1 and M2 to the respective heads 3A and 3B. Accordingly, in manufacturing the tire member M by continuously supplying the tire materials M1 and M2 to the forming drum body 7, the complicated operation of urgently replenishing the tire materials M1, M2 can be avoided.

By using this supply system, the cylindrical tire member M formed by supplying the tire materials M1 and M2 to the forming drum body 7 and helically winding the materials on the forming drum body 7 can be manufactured without complicated operation and with high productivity.

The forming drum body 7 is not limited to typically known various forming drums. The forming drum body 7 may be, for example, a so-called rigid core having an outer surface substantially the same as the inner surface of the tire T to be manufactured.

The present embodiment illustrates the case of using two types of tire materials M1 and M2, but three or more types of tire materials may be used. In this case, as described above, the supply units and the heads (the heads arranged in series) are also provided for the tire materials by type to form the independent conveying paths and a single sliding unit 6 is provided.

The respective heads 3A and 3B are disposed below the forming drum body 7. A transport conveyor or the like is disposed for supplying other tire materials (belt material or the like) to the forming drum body 7. Since the transport conveyor is often installed above the forming drum body 7, the respective heads 3A and 3B of the present embodiment are placed below the forming drum body 7 in order to avoid the transport conveyor. When the transport conveyor is installed below the forming drum body 7, the respective heads 3A and 3B are placed above the forming drum body 7.

In the present embodiment, the plurality of support rollers are disposed in each supply path of the respective tire materials M1 and M2, and the tire materials M1 and M2 are stretched over the respective support rollers to change the conveying direction thereof. By using the support rollers in this manner, the conveying paths of the tire materials M1 and M2 can be extended three dimensionally in desired directions, allowing the conveying paths to be easily created even in a narrow space.

### Reference Signs List

1 (1A, 1B) Supply unit
2a, 2b Festoon portion
3A, 3B Head
4 Compression bonding portion
5 Proximity movement unit
6 Sliding unit
7 Forming drum body
M1, M2 Tire material
M Tire member

## Claims

1. A system for supplying a tire material to a forming drum body, the system comprising:
supply units disposed at a stock position and each including a type of tire material having a strip shape wound and stocked;
a forming drum body around which each tire material is helically wound; and
a head for each type of tire material configured to helically wind the tire material unreeled from each of the supply units around the forming drum body;
a supply path from each of the supply units to the head being independent for each type of tire material, in each supply path, a festoon portion configured to store a predetermined amount of the tire material supplied through the supply path between the supply unit and the head being placed,
each head being disposed displaced in a drum front-rear direction with respect to the forming drum body, and each head being configured to integrally slide in a width direction of the forming drum body.

2. The system for supplying a tire material to a forming drum body according to claim 1, wherein each head is placed below the forming drum body.

3. The system for supplying a tire material to a forming drum body according to claim 1 or 2, wherein
a plurality of support rollers are disposed in each supply path, and
the tire material supplied through the supply path is stretched over each of the support rollers and thus changes its conveying direction.

4. A method of manufacturing a cylindrical tire member, the method comprising
using the system for supplying a tire material to a forming drum body according to claim 1 or 2, supplying the tire material to the forming drum body, helically winding the tire material, and manufacturing a cylindrical tire member.

5. A method for manufacturing a cylindrical tire member, the method comprising
using the system for supplying a tire material to a forming drum body according to claim 3, supplying the tire material to the forming drum body, helically winding the tire material, and manufacturing a cylindrical tire member.
